# EUROPÄISCHE PATENTSCHRIFT

(11) **EP 2 959 467 B1**
(45) Veröffentlichungstag und Bekanntmachung des Hinweises auf die Patenterteilung: **28.12.2016**
(21) Anmeldenummer: 14705036.3
(22) Anmeldetag: 14.02.2014
(51) Int. Cl.: G08G 1/0967, G01C 21/36, B60R 16/037, G05B 13/02, G07C 5/00, G08G 1/16

(54) **SYSTEM ZUR GEWINNUNG VON REGELSÄTZEN FÜR EINE KRAFTFAHRZEUGAUTOMATISIERUNG**
SYSTEM FOR OBTAINING RULE SETS FOR MOTOR VEHICLE AUTOMATION
SYSTÈME D'ACQUISITION DE GROUPES DE RÈGLES POUR UNE AUTOMATISATION D'UN VÉHICULE AUTOMOBILE

(30) Priorität: 22.02.2013 DE 102013003042
(43) Veröffentlichungstag der Anmeldung: 30.12.2015
(73) Patentinhaber: Audi AG, 85045 Ingolstadt (DE)
(72) Erfinder: LAMPRECHT, Andreas, 85633 Neuberg (DE); HAINZLMAIER, Andre, 85290 Geisenfeld (DE)
(74) Vertreter: Bauer, Dominik Michael
(86) Internationale Anmeldenummer: PCT/EP2014/000408
(87) Internationale Veröffentlichungsnummer: WO 2014/127898

(56) Entgegenhaltungen:
- WO-A1-2010/134824
- DE-A1- 19 832 096
- DE-A1-102004 032 983
- DE-A1-102010 053 037
- US-B1- 6 553 308

## Beschreibung

Die Erfindung betrifft ein Verfahren zum Gewinnen von Regelsätzen für ein Fahrzeug. Jeder Regelsatz umfasst eine Aktivierungsbedingung und eine bei erfüllter Aktivierungsbedingung zu aktivierende Fahrzeugfunktion des Kraftfahrzeugs. Das Kraftfahrzeug ist entsprechend dazu ausgelegt, wiederholt in unterschiedlichen Situationen Fahrzeugdaten zu ermitteln und den so gebildeten jeweiligen Datensatz daraufhin zu überprüfen, ob er die Aktivierungsbedingung eines der Regelsätze erfüllt. Ist dies der Fall, so wird die zugehörige Fahrzeugfunktion durch das Kraftfahrzeug aktiviert oder zumindest zur Aktivierung angeboten.

Ein solches Kraftfahrzeug ist beispielsweise aus der DE 10 2010 051 205 A1 bekannt. Das in dieser Druckschrift beschriebene Kraftfahrzeug weist eine Anzeigeeinrichtung zum Anzeigen von Bildern auf, die von unterschiedlichen Kameras des Kraftfahrzeugs erzeugt werden können. Während einer Fahrt wird durch das Kraftfahrzeug beispielsweise die Fahrgeschwindigkeit bemessen. Erfüllt die Fahrgeschwindigkeit eine vorbestimmte Bedingung, so wird die Anzeigeeinrichtung durch das Kraftfahrzeug automatisch auf eine andere Kamera umgeschaltet. Die Bedingung für die Fahrgeschwindigkeit ergibt sich dabei aus einer Beobachtung des Benutzerverhaltens einer Bedienperson in dem Kraftfahrzeug. Schaltet die Bedienperson immer wieder manuell die Anzeigeeinrichtung bei einer bestimmten Geschwindigkeit um, so "lernt" das Kraftfahrzeug hierdurch die Bedingung für die Fahrgeschwindigkeit und schaltet dann nach einer vorbestimmten Anzahl von Bedienvorgängen zukünftig selbständig die Anzeige um.

Die bekannte Anzeigeeinrichtung erfordert eine Anlernphase, in welcher das Bedienverhalten der Bedienperson beobachtet werden muss, damit die Aktivierungsbedingungen für das Umschalten der Anzeige ermittelt werden können.

Eine sich selbst umstellende Benutzerschnittstelle ist auch aus der DE 10 2009 049 110 A1 bekannt. Die darin beschriebene Benutzerschnittstelle ermittelt zu einer aktuellen Fahrsituation Kontextdaten und schaltet zwischen einem Anzeigezustand und einem Bedienzustand in Abhängigkeit von den Kontextdaten um. Im Bedienzustand zeigt die Benutzerschnittstelle auf einer Anzeige Bedieninformationen zu einer Eingabeeinrichtung an. In dem Anzeigezustand werden dagegen Informationen dargestellt, die keinem Bedienschritt zugeordnet sind.

Aus dem Dokument GB 2 475 871 A gehen ein Verfahren und eine Vorrichtung zum Funktionsmapping mit Lernmodi für ein Kraftfahrzeug hervor. Der Fahrer- und Mitfahrerkomfort beim Fahren eines Kraftfahrzeugs wird dadurch verbessert, dass die automatische Durchführung von Arbeitsschritten ermöglicht wird, die von dem Fahrer an bestimmten Orten regelmäßig ausgeführt wird.

Der Erfindung liegt die Aufgabe zugrunde, Fahrzeugfunktionen in einem Kraftfahrzeug situationsabhängig ohne eine aufwändige Anlernphase automatisch zu aktivieren.

Die Aufgabe wird durch ein Verfahren gemäß Patentanspruch 1, eine Serveranordnung gemäß Patentanspruch 8, ein Kraftfahrzeug gemäß Patentanspruch 9, ein Kraftfahrzeug gemäß Patentanspruch 12 und ein System gemäß Patentanspruch 14 gelöst. Vorteilhafte Weiterbildungen der Erfindung sind durch die Unteransprüche gegeben.

Die Kraftfahrzeuge und die Serveranordnung bilden zusammen das erfindungsgemäße System, durch welches die eingangs beschriebene Anlernphase in einem zu automatisierenden Kraftfahrzeug verkürzt wird. Mit anderen Worten ermöglicht das erfindungsgemäße System das Gewinnen von Regelsätzen für die automatische Aktivierung, ohne dass hierzu eine Bedienperson des zu automatisierenden Fahrzeugs immer wieder selbst die Fahrzeugfunktionen aktivieren muss, damit die entsprechende Aktivierungsbedingung durch das zu automatisierende Kraftfahrzeug erkannt wird.

Der Erfindung liegt das Prinzip zugrunde, dass in bestimmten Situationen oder an bestimmten Orten in einer Vielzahl von anderen Kraftfahrzeugen bereits regelmäßig eine bestimmte Bedienaktion durchgeführt wird. Beispielsweise schalten viele Personen bei einer Einfahrt in einen Tunnel die Fahrzeugscheinwerfer an. Dieses situationsabhängige Verhaltens- oder Bedienmuster anderer Personen in anderen Kraftfahrzeugen oder an bestimmten Orten wird beobachtet und dazu genutzt, eine Datenbasis zu bilden und dann die beobachteten Bedienaktionen automatisch auch in dem zu automatisierenden Kraftfahrzeug durchzuführen, wenn sich dieses zu automatisierende Kraftfahrzeug in einer gleichen oder zumindest einer ähnlichen Situation oder an demselben oder zumindest an einem in einer bestimmten Eigenschaft ähnlichen Ort befindet. Die Erfindung geht dabei davon aus, dass die Automatisierung auf Grundlage von Regelsätzen erfolgt, wobei durch jeden Regelsatz eine Aktivierungsbedingung und eine bei erfüllter Aktivierungsbedingung zu aktivierende Fahrzeugfunktion festgelegt ist. Bei dem obigen Beispiel kann das beschriebene Bedienmuster also als Grundlage für einen Regelsatz der folgenden Art genutzt werden: "Falls das Navigationssystem eine Einfahrt in einen Tunnel signalisiert, dann schalte die Fahrzeugscheinwerfer ein."

Das zu automatisierende Kraftfahrzeug muss entsprechend für die Realisierung der Erfindung dazu ausgelegt sein, zu einer aktuellen Situation einen Datensatz zu ermitteln, welcher Fahrzeugdaten umfasst, die durch das Fahrzeug in der aktuellen Situation erfasst werden und die situationsabhängig sind, d.h. die die aktuelle Situation widerspiegeln. Beispielsweise können die Fahrzeugdaten mittels eines Regensensors und eines Temperaturfühlers gebildet sein, so dass als aktuelle Situation durch den Datensatz dann z.B. angegeben sein kann, dass es gerade regnet und es nur wenige Grad über 0 hat. Im obigen Beispiel wird eine Statusmeldung des Navigationssystems ("Tunneleinfahrt") berücksichtigt.

Die Erfindung geht davon aus, dass das zu automatisierende Fahrzeug dazu ausgelegt ist zu überprüfen, ob der jeweilige Datensatz von Fahrzeugdaten zumindest eine der Aktivierungsbedingungen erfüllt, wie sie durch die Regelsätze gegeben sind. Für den Fall, dass eine der Aktivierungsbedingungen erfüllt ist, wird dann durch das Kraftfahrzeug die zugehörige Fahrzeugfunktion selbständig aktiviert oder zumindest einer Bedienperson in dem Kraftfahrzeug für eine Aktivierung vorgeschlagen.

Um nun die beschriebene Datenbasis zum Gewinnen der Regelsätze bilden zu können, sieht das erfindungsgemäße Verfahren vor, dass durch eine ortsfeste, zentrale Serveranordnung, beispielsweise eine Server-Computereinrichtung des Internets, von mehreren anderen Kraftfahrzeugen jeweils Informationen darüber zu empfangen, in welcher Situation eine Bedienperson welche Fahrzeugfunktion aktiviert hat oder in welcher Situation das Kraftfahrzeug selbst eine Fahrzeugfunktion wie beispielsweise das Antiblockiersystem oder ein elektronisches Stabilitätsprogramm (ESP) aktiviert hat. Die Serveranordnung empfängt also zumindest eine Aktivierungsinformation zu einer in einer bestimmten Situation des Kraftfahrzeugs aktivierten Fahrzeugfunktion. Zusätzlich empfängt die Serveranordnung zu dieser Aktivierungsinformation noch einen Datensatz von Fahrzeugdaten, den das Kraftfahrzeug in der jeweiligen Situation ermittelt hat, also z.B. einen Datensatz aus Sensordaten eines oder mehrere Fahrzeugsensoren und/oder Statusmeldungen einer oder mehrerer Fahrzeugkomponenten.

Auf diese Weise wird durch die Serveranordnung die Datenbasis gebildet, aus der für viele unterschiedliche Situationen hervorgeht, welche Fahrzeugdaten ein Fahrzeug jeweils ermittelt hat und welche Fahrzeugfunktion in der Situation aktiviert wurde. Die Fahrzeugdaten stellen dabei eine Beschreibung der jeweiligen Situation dar.

Anhand der empfangenen Datensätze und der zugehörigen Aktivierungsinformationen wird dann durch die Serveranordnung der zumindest eine Regelsatz gebildet und an das zu automatisierende Kraftfahrzeug übermittelt. Hierdurch ergibt sich der Vorteil, dass dieses zu automatisierende Kraftfahrzeug nun ohne ein Zutun der Bedienperson dieses Kraftfahrzeugs durch diese Regelsätze bereits automatisch personalisiert ist. In dem Fahrzeug werden auf Grundlage der Regelsätze Fahrzeugfunktionen automatisch aktiviert oder zumindest vorgeschlagen, und zwar jeweils in Situationen, welche die Bedienperson in dem Kraftfahrzeug, also beispielsweise der Fahrer, auch selbst mit hoher Wahrscheinlichkeit zum Anlass nehmen würde, die jeweilige Fahrzeugfunktion zu aktivieren bzw. beispielsweise aus einem Bedienmenü herauszusuchen und dann zu aktivieren.

Die genutzten Fahrzeugdaten zum Beschreiben der Situationen können sehr vielseitig sein. In vorteilhafter Weise umfassen die Fahrzeugdaten eine Angabe zu zumindest einem aus den folgenden Situationsmerkmalen: Einen aktuellen Aufenthaltsort des Kraftfahrzeugs, also eine absolute Positionsangabe, eine relative Positionsangabe, also beispielsweise einen Abstand zu einem vorausfahrenden Fahrzeug, eine Fahrgeschwindigkeit des Kraftfahrzeugs, eine Temperatur, also beispielsweise eine Außentemperatur oder eine Innentemperatur, eine Standdauer des jeweiligen Kraftfahrzeugs, also beispielsweise eine Parkdauer oder Standzeit an eine Ampel, eine Zeitangabe (Uhrzeit, Wochentagsangabe, Monat, Jahreszeit), einen Wert eines Betriebsparameters des jeweiligen Kraftfahrzeugs (z.B. Tankfüllstand, Drehzahl, Stellung eines Cabriolet-Daches, aktuelle Bereifung).

Wie bereits ausgeführt, sollte ein Regelsatz auch dann eine Aktivierung einer passenden Fahrzeugfunktion bewirken, wenn eine aktuelle Situation in dem zu automatisierenden Kraftfahrzeug oder sein aktueller Aufenthaltsort nicht exakt mit einer Situation oder einem Aufenthaltsort übereinstimmt, der durch einen Regelsatz als Aktivierungsbedingung vorgegeben ist. Hierzu wird durch die Serveranordnung in vorteilhafter Weise der zumindest eine Regeldatensatz in der Weise gebildet, dass er auch einen Toleranzbereich für die Überprüfung der Aktivierungsbedingung umfasst.

Eine besonders flexible Form zum Bilden von Regelsätzen, die eine Vielzahl unterschiedlicher Angaben von Fahrzeugdaten berücksichtigen kann (digitale Werte, Signalverläufe, beschreibende Angaben wie z.B. Sommer, Herbst, Winter), ist gemäß einer Ausführungsform des Verfahrens gegeben, indem durch die Serveranordnung ein Regelsatz mit zumindest einer Wenn-Dann-Regel für einen Wert aus den Fahrzeugdaten gebildet wird. Beispielsweise kann so die folgende verhältnismäßig komplexe Situation als Aktivierungsbedingung vorgegeben werden: Wenn es "Winter" ist und das Fahrzeug "nachts" "mindestens sieben Stunden" geparkt war und der "Motor gestartet" wird, dann aktiviere die Standheizung.

Die erfindungsgemäße Serveranordnung, die das erfindungsgemäße Verfahren durchführt, kann mit der Zeit Informationen von einer großen Anzahl von Kraftfahrzeugen empfangen. Es können von mehreren 100 Kraftfahrzeugen und sogar von mehreren 1000 Kraftfahrzeug für eine Vielzahl unterschiedlicher Situationen jeweils Informationen darüber empfangen werden, welche Fahrzeugfunktion in der jeweiligen Situation aktiviert wurde und welche Fahrzeugdaten sich in der jeweiligen Situation ergeben haben. Um hierbei effizient aussagekräftige Regelsätze bilden zu können, sieht eine Ausführungsform des Verfahrens vor, mittels einer als Data-Mining bekannten Methode in den empfangenen Datensätzen und den zugehörigen Aktivierungsinformationen nach zumindest einem Bedienmuster zu suchen, welches zu typischen, in den Datensätzen immer wiederkehrenden Situationen eine typischerweise aktivierte Fahrzeugfunktion angibt. Informationen über eine geeignete Data-Mining-Methode stehen der Fachwelt beispielsweise durch die Publikationen der Lehr- und Forschungseinheit für Datenbanksysteme von Prof. Dr. Hans-Peter Kriegel an der Ludwig-Maximilians-Universität München zur Verfügung.

Als besonders vorteilhaft hat sich herausgestellt, wenn zusätzlich zu den Datensätzen der anderen Kraftfahrzeuge ein Regelsatz auch auf der Grundlage von Verkehrsdaten gebildet wird, die unabhängig von dem jeweiligen Kraftfahrzeug erfasst wurden. So kann beispielsweise auch das Wissen darüber in einen Regelsatz einfließen, dass eine bestimmte Kreuzung besonderes unfallträchtig ist. So kann beispielsweise bei einer unfallträchtigen Kreuzung als Fahrzeugfunktion eine Assistenzfunktionalität eines Navigationssystems aktiviert werden, durch welche dem Fahrer ein verbesserter Überblick über die vor ihm liegende Kreuzung gegeben wird. Beispielsweise kann eine Zoomfunktion des Navigationsgeräts aktiviert werden, durch welche geografische Details zu der Kreuzung für den Fahrer besser erkennbar werden. Mit anderen Worten kann über die Zusatzdaten zu bestimmten Orten oder auch für typische Verkehrssituationen ein Regelsatz formuliert werden, der diese typischen Fälle berücksichtigt.

Damit das erfindungsgemäße Verfahren umgesetzt werden kann, sind neben der beschriebenen Serveranordnung zum Durchführen des Verfahrens zum einen auch Kraftfahrzeuge nötig, mittels welcher die Aktivierungsfunktionen und die zugehörigen, situationsbeschreibenden Datensätze gesammelt werden können, und andererseits ein Kraftfahrzeug, welches sich mittels der Regelsätze der Serveranordnung automatisieren lässt.

Entsprechend betrifft ein Aspekt der Erfindung ein Kraftfahrzeug, welches dazu ausgelegt ist, a) zumindest eine Aktivierungsinformation zu einer Bedienhandlung zu erfassen, also zu einer in einer bestimmten Situation aktivierten Fahrzeugfunktion, und b) in der jeweiligen Situation einen Datensatz von situationsabhängigen Fahrzeugdaten zu erzeugen, die durch das Kraftfahrzeug ermittelt wurden. Das Kraftfahrzeug übermittelt dann die Aktivierungsinformation und den zugehörigen Datensatz an die erfindungsgemäße Serveranordnung.

Auf der anderen Seite, als Empfänger der Regelsätze der Serveranordnung, sieht die Erfindung ein Kraftfahrzeug vor, das in der beschriebenen Weise einen Speicher für zumindest einen Regelsatz der beschriebenen Art aufweist und dazu ausgelegt ist, zu einer aktuellen Situation einen Datensatz aus aktuellen Fahrzeugdaten zu bilden und diesen Datensatz daraufhin zu überprüfen, ob er eine der Aktivierungsbedingungen der Regelsätze erfüllt. Das Fahrzeug kann dann selbständig bei erfüllter Aktivierungsbedingung die zugehörige Fahrzeugfunktion aktivieren oder zumindest einer Bedienperson in dem Kraftfahrzeug zur Aktivierung vorschlagen. Das erfindungsgemäße Kraftfahrzeug ist dabei dazu ausgelegt, zumindest einen Regelsatz von einer erfindungsgemäßen Serveranordnung zu empfangen und in seinem Speicher abzuspeichern.

Bevorzugt ist bei dem erfindungsgemäßen Kraftfahrzeug vorgesehen, dass bei einer selbständigen Aktivierung einer Fahrzeugfunktion dies einer Bedienperson signalisiert wird. Hierdurch ergibt sich der Vorteil, dass die Bedienperson auf eine Änderung des Fahrzeugzustands aufmerksam gemacht wird.

Besonders vorteilhaft ist es auch, wenn in dem Kraftfahrzeug eine Bedieneinrichtung vorgesehen ist, welche dazu ausgelegt ist, die aktivierte Fahrzeugfunktion wieder rückgängig zu machen. Die Bedieneinrichtung ist dabei in der Weise ausgestaltet, dass eine Bedienperson die Bedieneinrichtung immer auf dieselbe Weise betätigen muss, um die Aktivierung rückgängig zu machen, unabhängig davon, welche Fahrzeugfunktion aktiviert worden ist. Hierdurch ergibt sich der Vorteil, dass bei einer für beispielsweise den Fahrer überraschenden Aktivierung einer Fahrzeugfunktion stets ein und dieselbe Bedienhandlung an der Bedieneinrichtung auszuführen ist, damit sofort wieder der alte Fahrzeugzustand hergestellt werden kann. Dies ist besonders sicher.

Im Zusammenhang mit der Erfindung ist unter den beschriebenen Fahrzeugfunktionen insbesondere zu verstehen: Ein Ansichtswechsel in einem Navigationssystem, ein Kreuzungsassistent in einem Navigationssystem, durch welchen eine für das Durchfahren der Kreuzung angepasste Ansicht auf einem Bildschirm des Navigationssystems dargestellt wird, eine Sitzheizung, eine Heckscheibenheizung, eine Fahrzeugbeleuchtung, eine Klimaanlage.

Im Folgenden ist die Erfindung noch einmal anhand eines konkreten Ausführungsbeispiels erläutert. Bei dem Ausführungsbeispiel stellen die beschriebenen Komponenten der Ausführungsform und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

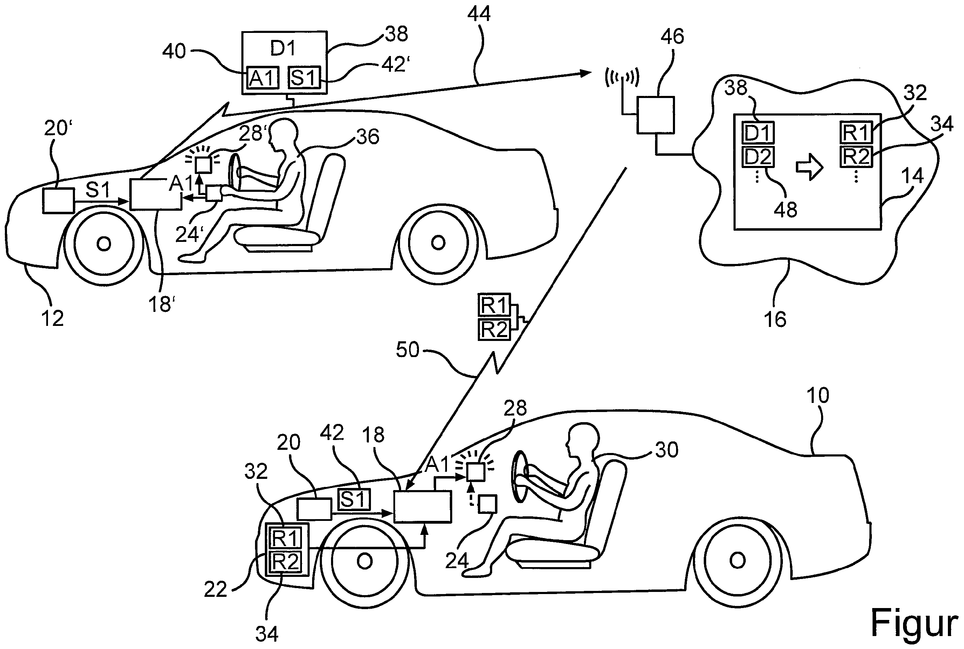

In der Figur sind ein Kraftfahrzeug 10 und ein Kraftfahrzeug 12 und eine Serveranordnung 14 des Internets 16 gezeigt. Bei den Kraftfahrzeugen 10, 12 kann es sich beispielsweise um Personenkraftwagen handeln. Bei der Serveranordnung 14 kann es sich um einen oder mehrere Computer handeln.

Das Kraftfahrzeug 10 weist eine Steuereinrichtung 18, eine Sensorik 20, einen Speicher 22, eine Bedieneinrichtung 24 für eine oder mehrere Fahrzeugkomponenten 26 auf. Die Komponenten 28 sind in der Figur durch ein einziges Symbol repräsentiert. In dem Kraftwagen 10 kann ein Fahrer 30 bei Bedarf durch Betätigen der Bedieneinrichtung 24 die Komponenten 28 bedienen, also Funktionen, die durch die Komponenten 28 bereitgestellt sind, aktivieren. Bei dem Kraftwagen 10 ist aber auch ermöglicht, dass die durch die Komponenten 28 bereitgestellten Fahrzeugfunktionen ohne Zutun des Fahrers 30 durch das Kraftfahrzeug 10 selbständig aktiviert werden. Dies wird durch die Steuereinrichtung 18 ermöglicht. Bei der Steuereinrichtung 18 kann es sich beispielsweise um ein Steuergerät oder einen zentralen Rechner des Kraftfahrzeugs 10 handeln.

Die Steuereinrichtung 18 wertet Fahrzeugdaten aus, die von eine Sensorik 20 des Kraftfahrzeugs 10 erzeugt werden. Die Sensorik 20 kann einen Teil oder alle der aus dem Stand der Technik bekannten, für ein Kraftfahrzeug typischen Sensoren umfassen. Beispielsweise kann die Sensorik 20 einen Temperaturfühler, einen GPS-Empfänger (GPS - Global Positioning System), eine Kamera, ein Abstandsradar oder einen Spurwechselassistenten umfassen. Zu der Sensorik 20 werden im Zusammenhang mit der Erfindung aber auch beispielsweise das Navigationssystem mit den durch dieses bereitgestellten Navigationsdaten, ein Verkehrsinformationssystem, wie beispielsweise RDS (Radio Data System), ein Telefoniemodul, welches eingehende Telefonanrufe signalisiert, und weitere Komponenten des Kraftfahrzeugs 10 verstanden, welche geeignet sind, durch ihre Signale eine aktuelle Fahrsituation des Kraftfahrzeugs 10 zu beschreiben.

In dem Speicher 22 können Regelsätze 32, 34 (R1, R2) gespeichert sein. Jeder Regelsatz 32, 34 beschreibt eine Zuordnungsvorschrift, durch welchen bestimmte Werte von Fahrzeugdaten, wie sie durch die Sensorik 20 erzeugt werden, einer bei Vorliegen dieser Werte zu aktivierenden Fahrzeugfunktion der Komponenten 28 zugeordnet sind. Die Steuereinrichtung 18 empfängt von der Sensorik 20 zu vorbestimmten Zeitpunkten jeweils einen Datensatz 42 von aktuellen Fahrzeugdaten, der die aktuelle Situation beschreibt, und überprüft, ob die durch die Regeln 32, 34 beschriebenen Aktivierungsbedingungen erfüllt sind. Trifft eine der Aktivierungsbedingungen zu, so wird durch die Steuereinrichtung 18 die entsprechende Fahrzeugfunktion in den Komponenten 28 aktiviert.

Zur besseren Anschaulichkeit sei angenommen, dass der Regelsatz 32 (R1) als Aktivierungsbedingung eine Wertekombination der Fahrzeugdaten vorgibt, durch welche eine Situation S1 beschrieben ist. In der Situation S1 soll eine Fahrzeugfunktion A1 aktiviert werden. Beispielsweise kann die Situation S1 dadurch beschrieben sein, dass es regnet, eine Außentemperatur < 5° C ist, es draußen dunkel ist und sich der Fahrer auf einer Landstraße in einem bewaldeten Gebiet befindet. Als Fahrzeugfunktionalität soll dann beispielsweise eine Frontscheibenheizung aktiviert werden.

In dem gezeigten Beispiel ist des Weiteren davon ausgegangen, dass durch die Sensorik 20 gerade Fahrzeugdaten erzeugt wurden, durch welche signalisiert ist, dass die Situation S1 tatsächlich vorliegt. Erkennt nun das Steuergerät, dass die Situation S1 vorliegt, so stimmen die von der Sensorik 20 erzeugten Fahrzeugdaten also mit den Werteintervallen überein, die durch die Aktivierungsbedingungen der Regelsatz 32 (R1) vorgegeben sind. Entsprechend ermittelt die Steuereinheit 18 aus dem Regelsatz 32 die zu aktivierende Fahrzeugfunktion A1 und steuert entsprechend die Komponenten 28 an. Im vorliegenden Beispiel wird so die Frontscheibenheizung aktiviert, ohne dass der Fahrer 30 hierzu die Bedieneinrichtung 24 selbst betätigen musste.

Die Regelsätze 32, 34 im Speicher 22 musste der Fahrer 30 auch nicht selbst festlegen. Sie mussten auch nicht bei der Herstellung des Kraftfahrzeugs 10 vorgegeben werden. Die Regelsätze 32, 34 sind durch Beobachten des Bedienverhaltens anderer Fahrer in anderen Kraftfahrzeugen ermittelt worden. Hierzu wurden spezielle Kraftfahrzeuge von der Serveranordnung 14 beobachtet. Eines dieser Kraftfahrzeuge ist das Kraftfahrzeug 12. In dem Kraftfahrzeug 12 sind ähnlich wie bei dem Kraftfahrzeug 10 Fahrzeugkomponenten 28' zum Bereitstellen von Fahrzeugfunktionen, eine Bedieneinrichtung 24' zum Bedienen der Komponenten 28', eine Steuereinrichtung 18' und eine Sensorik 20' bereitgestellt. Der schaltungstechnische Aufbau dieser Komponente kann in der gleichen Weise realisiert sein wie diejenigen des Kraftfahrzeugs 10, so dass eine weitere Erläuterung hier nicht nötig ist.

Wann immer eine Bedienperson, beispielsweise ein Fahrer 36, in dem Kraftfahrzeug 12 mittels der Bedieneinrichtung 24' eine Fahrzeugfunktion, die durch die Komponenten 28' bereitgestellt ist, aktiviert, wird dies auch von der Steuereinrichtung 18' erfasst. Zu der so erfassten, aktivierten Fahrzeugfunktion wird ein Datensatz 42' bereitgestellt, welcher die durch die Sensorik 20' gerade erzeugt Fahrzeugdaten umfasst. Durch diese Fahrzeugdaten ist die aktuelle Situation beschrieben, in welcher der Fahrer 36 die Fahrzeugfunktion mittels der Bedieneinrichtung 24' aktiviert hat. In dem Beispiel sei angenommen, dass bei Aktivieren der Fahrzeugfunktion A1 in dem Kraftfahrzeug 12 durch die Fahrzeugdaten der Sensorik 20' gerade die Situation S1 signalisiert wurde. Die Steuereinrichtung 18' bildet ein Datenpaket 38 (D1) aus einer Aktivierungsinformation 40, welche die erkannte Fahrzeugaktivität A1 beschreibt, und dem Datensatz 42' und sendet das Datenpaket 38 über eine Funkverbindung 44 beispielsweise an ein Mobilfunknetzwerk 46, welches mit dem Internet 16 verbunden ist und über welches das Datenpaket 38 von der Serveranordnung 14 empfangen wird.

Wie das Datenpaket 38 empfängt die Serveranordnung auch von dem Kraftfahrzeug 12 und auch von anderen Kraftfahrzeugen weitere Datenpakete, von denen in der Figur nur ein weiteres Datenpaket 48 gezeigt ist, welches Daten D2 betreffend eine andere oder dieselbe Fahrzeugfunktion A1 und Datensätze zu derselben Situation S1 oder einer anderen Situation umfassen kann. Die so gesammelten Datenpakete 38, 48 mit Aktivierungsinformationen und zugehörigen Datensätzen werden durch die Serveranordnung 14 daraufhin analysiert, ob sich eine Regelmäßigkeit betreffend ein Bedienungsmuster von Bedienpersonen in Kraftfahrzeugen, wie dem Kraftfahrzeug 12, erkennen lässt. Hierzu kann beispielsweise eine Data-Mining-Methode verwendet werden. Aus jedem erkannten Bedienmuster wird ein entsprechender Regelsatz 32, 34 gebildet. Die Regelsätze 32, 34 werden dann von der Serveranordnung 14 beispielsweise über das Mobilfunknetz 46 und eine Mobilfunkverbindung 50 an Kraftfahrzeuge wie das Kraftfahrzeug 10 übertragen, welche einen Speicher 22 für Regelsätze aufweisen. So ist es möglich, dass beispielsweise der Fahrer 30 in derselben Situation S1, in welcher sich der Fahrer 36 und andere Fahrer vor ihm befanden, durch die Steuereinrichtung 18 die Fahrzeugfunktion A1 aktiviert bekommt, ohne dass er hierzu selbst tätig werden muss.

Weiter bevorzugt ist hierbei, dass der Fahrer 30 die automatisch durchgeführte Bedienaktion, also die Aktivierung einer bestimmten Fahrzeugfunktion, rückgängig machen kann, indem er beispielsweise eine Taste der Bedieneinrichtung 24 betätigt. Zudem ist bevorzugt vorgesehen, dass dem Fahrer 30 bei Aktivieren einer Fahrzeugfunktion dies beispielsweise auf einer Anzeigeeinrichtung angezeigt wird, also allgemein signalisiert wird (grafisch, haptisch, akustisch). Hierdurch wird vermieden, dass der Fahrer 30 überrascht wird und so vom Verkehr abgelenkt wird.

Durch das Beispiel ist gezeigt, wie das Kraftfahrzeug 10 eine Personalisierung automatisch durchführt und der Fahrer hierbei informiert wird und auch in die Lage versetzt wird, eine einzelne Aktion rückgängig zu machen. Informationen über die Fahrzeugbedienung werden hierbei zusammen mit Fahrzeugdaten (etwa der Position oder Fahrgeschwindigkeit) von einem Kraftfahrzeug 12 an einen zentralen Server 14 übermittelt und mit Daten aus anderen Fahrzeugen verglichen. Dabei werden Auffälligkeiten identifiziert und dementsprechend Regeln erstellt, die beispielsweise in der Form gebildet sein können: "Wenn Faktoren x, y, z eine bestimmte Ausprägung haben, dann führe die Aktion a aus."

Werden für wiederkehrende Ereignisse an bestimmten Orten oder zu bestimmten Zeiten jeweils durch Fahrer unterschiedlicher Fahrzeuge stets dieselben Bedienaktionen ausgelöst, so wird dies nun bei dem Kraftfahrzeug 10 automatisiert.

## Patentansprüche

1. Verfahren zum Gewinnen von Regelsätzen (32, 34) für ein zu automatisierendes Kraftfahrzeug (10), wobei durch jeden Regelsatz (32, 34) eine Aktivierungsbedingung (S1) und eine bei erfüllter Aktivierungsbedingung (S1) zu aktivierende Fahrzeugfunktion (A1) festgelegt ist und wobei das Kraftfahrzeug (10) dazu ausgelegt ist, zu einer aktuellen Situation (S1) einen Datensatz (42) mit durch das Kraftfahrzeug (10) erfassten situationsabhängigen Fahrzeugdaten zu ermitteln und zu überprüfen, ob der Datensatz (42) eine der Aktivierungsbedingungen (S1) erfüllt, und gegebenenfalls selbständig die zugehörige Fahrzeugfunktion (A1) zu aktivieren oder für eine Aktivierung vorzuschlagen,
**dadurch gekennzeichnet, dass** bei dem Verfahren:
a) durch eine ortsfeste, zentrale Serveranordnung (14) von einer Vielzahl von anderen Kraftfahrzeugen (12) jeweils zumindest eine Aktivierungsinformation (40) zu einer in einer jeweiligen aktuellen Situation (S1) des jeweiligen anderen Kraftfahrzeugs (12) aktivierten Fahrzeugfunktion (A1) empfangen wird;
b) durch die ortsfeste, zentrale Serveranordnung ein in der jeweiligen aktuellen Situation (S1) ermittelter Datensatz (42') von durch das jeweilige andere Kraftfahrzeug (12) ermittelten Fahrzeugdaten empfangen wird und
c) anhand der empfangenen Datensätze (42') und der zugehörigen Aktivierungsinformationen (40) die Regelsätze (32, 34) gebildet und an das zu automatisierende Kraftfahrzeug (10) übermittelt werden.

2. Verfahren nach Anspruch 1, wobei durch die Aktivierungsinformation (40) angegeben ist, welche Bedienhandlung von einer Bedienperson (36) in dem Kraftfahrzeug (12) in der jeweils aktuellen Situation (S1) durchgeführt wurde.

3. Verfahren nach einem der vorhergehenden Ansprüche, wobei die Fahrzeugdaten eine Angabe zu zumindest einem aus des folgenden Situationsmerkmalen umfassen: einen aktuellen Aufenthaltsort, eine absolute Positionsangabe, eine relative Positionsangabe, eine Fahrgeschwindigkeit, eine Temperatur, eine Standdauer des jeweiligen Kraftfahrzeug (12), eine Zeitangabe, einen Wert eines Betriebsparameters des jeweiligen Kraftfahrzeugs (12).

4. Verfahren nach einem der vorhergehenden Ansprüche, wobei der zumindest eine Regelsatz (32, 34) auch einen Toleranzbereich für die Überprüfung der Aktivierungsbedingung (S1) umfasst.

5. Verfahren nach einem der vorhergehenden Ansprüche, wobei zumindest ein Regelsatz (32, 34) jeweils zumindest eine Wenn-Dann-Regel für einen Wert aus den Fahrzeugdaten umfasst.

6. Verfahren nach einem der vorhergehenden Ansprüche, wobei zum Bilden zumindest eines Regelsatzes (32, 34) mittels eines Data-Mining in den empfangenen Datensätzen (38, 48) und den zugehörigen Aktivierungsinformationen zumindest ein Bedienmustern erkannt wird.

7. Verfahren nach einem der vorhergehenden Ansprüche, wobei der zumindest eine Regelsatz (32, 34) zusätzlich auf der Grundlage von Verkehrsdaten, die unabhängig von dem jeweiligen Kraftfahrzeug erfasst wurden, gebildet wird.

8. Serveranordnung (14) für einen Betrieb im Internet (16), welche dazu ausgelegt ist, ein Verfahren nach einem der vorhergehenden Ansprüche durchzuführen.

9. Kraftfahrzeug (10), in welchem ein Speicher (22) für zumindest einen Regelsatz (32, 34) vorgesehen ist, wobei durch jeden Regelsatz (32, 34) eine Aktivierungsbedingung (S1) und eine bei erfüllter Aktivierungsbedingung (S1) zu aktivierende Fahrzeugfunktion (A1) festgelegt ist, und welches dazu ausgelegt ist, zu einer aktuellen Situation (S1) einen Datensatz (42) mit durch das Kraftfahrzeug erfassten situationsabhängigen Fahrzeugdaten zu ermitteln und zu überprüfen, ob der Datensatz (42) eine der Aktivierungsbedingung (S1) erfüllt, und gegebenenfalls selbständig die zugehörige Fahrzeugfunktion (A1) zu aktivieren oder für eine Aktivierung vorzuschlagen,
**dadurch gekennzeichnet, dass**
das Kraftfahrzeug (10) dazu ausgelegt ist, den zumindest einen Regelsatz (32, 34) von einer Serveranordnung (14) nach Anspruch 8 zu empfangen und in dem Speicher (22) abzuspeichern.

10. Kraftfahrzeug (10) nach Anspruch 9, wobei das Kraftfahrzeug (10) dazu ausgelegt ist, bei einer selbständigen Aktivierung der Fahrzeugfunktion (A1) einer Bedienperson (30) die automatische Aktivierung zu signalisieren.

11. Kraftfahrzeug (10) nach Anspruch 9 oder 10, wobei eine Bedieneinrichtung (24) bereitgestellt ist, welche dazu ausgelegt ist, unabhängig davon, welche Fahrzeugfunktion (A1) aktiviert worden ist, diese bei Betätigen der Bedieneinrichtung (24) rückgängig machen.

12. Kraftfahrzeug (12), welches dazu ausgelegt ist, a) zumindest eine Aktivierungsinformation (40) zu einer in einer jeweiligen aktuellen Situation (S1) des Kraftfahrzeugs (12) aktivierten Fahrzeugfunktion (A1) zu erfassen und b) in der jeweiligen aktuellen Situation (S1) einen Datensatz (42') von durch das Kraftfahrzeug (12) ermittelten situationsabhängigen Fahrzeugdaten zu erzeugen und jeweils die Aktivierungsinformation (40) und den zugehörigen Datensatz (42') an eine Serveranordnung (14) nach Anspruch 8 zu übermitteln.

13. Kraftfahrzeug (10, 12) nach einem der Ansprüche 9 bis 12, wobei bei dem Kraftfahrzeug (10, 12) die zumindest eine aktivierte Fahrzeugfunktionen (A1) zumindest eine aus den folgenden umfasst: einen Ansichtswechsel im Navigationssystem, einen Kreuzungsassistenten in einem Navigationssystem, eine Sitzheizung, eine Heckscheibenheizung, eine Fahrzeugbeleuchtung, eine Klimaanlage.

14. System mit zumindest einem Kraftfahrzeug gemäß Anspruch 12, einer Serveranordnung gemäß Anspruch 8 und zumindest einem Kraftfahrzeug gemäß Anspruch 9.

## Claims

1. Method for obtaining rule sets (32, 34) for a motor vehicle (10) to be automated, wherein each rule set (32, 34) defines an activation condition (S1) and a vehicle function (A1) to be activated when the activation condition (S1) is satisfied, and wherein the motor vehicle (10) is configured to determine, for an actual situation (S1), a data set (42) comprising situation-dependent vehicle data captured by the motor vehicle (10), and to check whether the data set (42) satisfies one of the activation conditions (S1), and, where appropriate, to autonomously activate, or to propose for activation, the corresponding vehicle function (A1),
**characterised in that** in the method
a) a stationary, central server arrangement (14) receives from a plurality of other motor vehicles (12) at least one item of activation information (40) regarding a vehicle function (A1) activated in an actual respective situation (S1) of the respective other motor vehicle (12);
b) the stationary, central server arrangement receives a data set (42') determined in the current respective situation (S1) from vehicle data determined by the respective other motor vehicle (12) and
c) on the basis of the received data sets (42') and the corresponding activation information (40), the rule sets (32, 42) are generated and transmitted to the motor vehicle (10) to be automated.

2. Method according to claim 1, wherein the activation information (40) is used to indicate which operating action was performed by an operator (36) in the motor vehicle (12) in the respective actual situation (S1).

3. Method according to any of the preceding claims, wherein the vehicle data comprise information regarding at least one of the following situation features: an actual position, information on an absolute position, information on a relative position, a driving speed, a temperature, a standing period of the respective motor vehicle (12), time information, a value of an operating parameter of the respective motor vehicle (12).

4. Method according to any of the preceding claims, wherein the at least one rule set (32, 34) further comprises a tolerance range for verifying the activation condition (S1).

5. Method according to any of the preceding claims, wherein at least one rule set (32, 34) comprises at least one if-then-rule for a value of the vehicle data.

6. Method according to any of the preceding claims, wherein, for forming at least one rule set (32, 34) by using a data-mining process, at least one operating pattern is recognised in the received data sets (38, 48) and the respective activation information.

7. Method according to any of the preceding claims, wherein the at least one rule set (32, 34) is additionally generated on the basis of traffic data collected independently of the respective motor vehicle.

8. Server arrangement (14) for operation on the internet (16), which is configured to implement a method according to any of the preceding claims.

9. Motor vehicle (10), comprising a memory (22) for at least one rule set (32, 34), wherein each rule set (32, 34) defines an activation condition (S1) and a vehicle function (A1) to be activated when the activation condition (S1) is satisfied, and which is configured to determine, for an actual situation (S1), a data set (42) comprising situation-dependent vehicle data captured by the motor vehicle, and to check whether the data set (42) satisfies one of the activation conditions (S1) and, where appropriate, to autonomously activate, or to propose for an activation, the corresponding vehicle function (A1),
**characterised in that**
the motor vehicle (10) is configured to receive the at least one rule set (32, 34) from a server arrangement (14) according to claim 8, and to save it in the memory (22).

10. Motor vehicle (10) according to claim 9, wherein the motor vehicle (10) is configured to signal the automatic activation to an operator (30),
when the vehicle function (A1) is autonomously activated.

11. Motor vehicle (10) according to claim 9 or 10, wherein an operating device (24) is provided, which is configured to reverse the vehicle function, independently of which vehicle function (A1) has been activated, on activating the operating device (24).

12. Motor vehicle (12), which is configured a) to detect at least one item of activation information (40) regarding a vehicle function (A1) activated in a respective actual situation (S1) of the motor vehicle (12), and b) in the respective actual situation (S1) to generate a data set (42') comprising situation-dependent vehicle data captured by the motor vehicle (12), and to transmit the activation information (40) and the corresponding data set (42') to a server arrangement (14) according to claim 8.

13. Motor vehicle (10, 12) according to any of claims 9 to 12, wherein, in the motor vehicle (10, 12), the at least one activated vehicle function (A1) comprises at least one of the following: a change of view in the navigation system, an intersection assistant in a navigation system, seat heating, rear window heating, vehicle lighting, an air conditioning system.

14. System comprising at least one motor vehicle according to claim 12, a server arrangement according to claim 8 and at least one motor vehicle according to claim 9.

## Revendications

1. Procédé pour l'acquisition d'un ensemble de règles (32, 34) pour un véhicule automobile (10) à automatiser, une condition d'activation (S1) et une fonction de véhicule (A1) à activer lorsque la condition d'activation (S1) est satisfaite étant spécifiées pour chaque ensemble de règles (32, 34) et le véhicule automobile (10) étant configuré pour déterminer pour une situation instantanée (S1) un ensemble de données (42) avec des données de véhicule dépendantes de la situation et détectées par le véhicule automobile (10) et pour vérifier si l'ensemble de données (42) satisfait l'une des conditions d'activation (S1) et le cas échéant pour activer automatiquement la fonction de véhicule (A1) associée ou pour proposer une activation,
**caractérisé en ce que**, lors du procédé :
a) respectivement au moins une information d'activation (40) portant sur une fonction de véhicule (A1) activée dans une situation instantanée respective (S1) de l'autre véhicule automobile (12) respectif est reçue par un ensemble formant serveur (14) central stationnaire d'une pluralité d'autres véhicules automobiles (12);
b) un ensemble de données (42'), déterminé dans la situation instantanée (S1) respective, de données de véhicule déterminées par l'autre véhicule automobile (12) respectif est reçu par l'ensemble formant serveur central stationnaire et
c) à l'aide des ensembles de données (42') reçus et des informations d'activation (40) associées, les ensembles de règles (32, 34) sont formés et transmis au véhicule automobile (10) à automatiser.

2. Procédé selon la revendication 1, l'information d'activation (40) permettant d'indiquer l'opération, qui a été effectuée par un opérateur (36) dans le véhicule automobile (12) dans la situation instantanée (S1) respective.

3. Procédé selon l'une quelconque des revendications précédentes, les données de véhicule comprenant une indication portant au moins sur l'une des caractéristiques de situation suivantes : une localisation instantanée, une indication de position absolue, une indication de position relative, une vitesse de déplacement, une température, une durée d'immobilisation du véhicule automobile (12) respectif, une indication temporelle, une valeur d'un paramètre de fonctionnement du véhicule automobile (12) respectif.

4. Procédé selon l'une quelconque des revendications précédentes, l'au moins un ensemble de règles (32, 34) comprenant également une plage de tolérance pour la vérification de la condition d'activation (S1).

5. Procédé selon l'une quelconque des revendications précédentes, au moins un ensemble de règles (32, 34) comprenant respectivement au moins une règle si-alors pour une valeur issue des données de véhicule.

6. Procédé selon l'une quelconque des revendications précédentes, au moins une commande type étant identifiée pour former au moins un ensemble de règles (32, 34) au moyen d'une exploration de données dans les ensembles de données (38, 48) reçus et dans les informations d'activation associées.

7. Procédé selon l'une quelconque des revendications précédentes, l'au moins un ensemble de règles (32, 34) étant formé en supplément sur la base de données de circulation, qui ont été détectées indépendamment du véhicule automobile respectif.

8. Ensemble formant serveur (14) pour un fonctionnement sur Internet (16), lequel est configuré pour mettre en oeuvre un procédé selon l'une quelconque des revendications précédentes.

9. Véhicule automobile (10), dans lequel une mémoire (22) est prévue pour au moins un ensemble de règles (32, 34), une condition d'activation (S1) et une fonction de véhicule (A1) à activer lorsque la condition d'activation (S1) est satisfaite étant spécifiées pour chaque ensemble de règles (32, 34), et lequel véhicule automobile est configuré pour déterminer pour une situation instantanée (S1) un ensemble de données (42) avec des données de véhicule dépendantes de la situation et détectées par le véhicule automobile et pour vérifier si l'ensemble de données (42) satisfait l'une des conditions d'activation (S1) et le cas échéant pour activer de manière autonome la fonction de véhicule (A1) associée ou pour proposer une activation,
**caractérisé en ce que**
le véhicule automobile (10) est configuré pour recevoir au moins un ensemble de règles (32, 34) d'un ensemble formant serveur (14) selon la revendication 8 et pour le mémoriser dans la mémoire (22).

10. Véhicule automobile (10) selon la revendication 9, le véhicule automobile (10) étant configuré pour, en cas d'activation autonome de la fonction de véhicule (A1), signaler l'activation automatique à un opérateur (30).

11. Véhicule automobile (10) selon la revendication 9 ou 10, un dispositif de commande (24) étant fourni, lequel est configuré pour, quelle que soit la fonction de véhicule (A1) ayant été activée, annuler celle-ci lors de l'actionnement du dispositif de commande (24).

12. Véhicule automobile (12) qui est configuré pour a) détecter au moins une information d'activation (40) portant sur une fonction de véhicule (A1) activée dans une situation instantanée (S1) respective du véhicule automobile (12) et b) produire dans la situation instantanée (S1) respective un ensemble de données (42') de données de véhicule dépendantes de la situation et déterminées par le véhicule automobile (12) et pour transmettre respectivement l'information d'activation (40) et l'ensemble de données (42') associé à un ensemble formant serveur (14) selon la revendication 8.

13. Véhicule automobile (10, 12) selon l'une quelconque des revendications 9 à 12, l'au moins une fonction de véhicule (A1) activée pour le véhicule automobile (10, 12) comprenant au moins l'une des fonctions suivantes : un changement de vue dans le système de navigation, un assistant de croisement dans un système de navigation, un chauffage de siège, un chauffage de lunette arrière, un éclairage de véhicule, une climatisation.

14. Système comprenant au moins un véhicule automobile selon la revendication 12, un ensemble formant serveur selon la revendication 8 et au moins un véhicule automobile selon la revendication 9.
